# EUROPÄISCHE PATENTSCHRIFT

(11) **EP 3 033 751 B1**
(45) Veröffentlichungstag und Bekanntmachung des Hinweises auf die Patenterteilung: **23.10.2019**
(21) Anmeldenummer: 14750217.3
(22) Anmeldetag: 08.08.2014
(51) Int. Cl.: G21C 13/08, G21C 21/00, G21F 9/30, G21F 9/00, G21C 17/022, G21C 19/28, G21F 9/28

(54) **VERFAHREN ZUR VERRINGERUNG DER RADIOAKTIVEN KONTAMINATION DER OBERFLÄCHE EINER IN EINEM KERNREAKTOR EINGESETZTEN KOMPONENTE**
PROCESS FOR THE REDUCTION OF RADIOACTIVE CONTAMINATION OF THE SURFACE OF A COMPONENT USED IN A NUCLEAR REACTOR
PROCÉDÉ POUR LA RÉDUCTION DE LA CONTAMINATION RADIOACTIVE D'UNE SURFACE D'UNE COMPOSANTE UTILISÉE DANS UN REACTEUR NUCLÉAIR

(30) Priorität: 14.08.2013 DE 102013108802; 26.02.2014 DE 102014102487
(43) Veröffentlichungstag der Anmeldung: 22.06.2016
(73) Patentinhaber: Framatome GmbH, 91052 Erlangen (DE)
(72) Erfinder: STELLWAG, Bernhard, 90482 Nürnberg (DE); SEMPERE-BELDA, Luis, 91052 Erlangen (DE); RAMMINGER, Ute, 91154 Roth (DE)
(74) Vertreter: Schlögl, Markus
(86) Internationale Anmeldenummer: PCT/EP2014/067088
(87) Internationale Veröffentlichungsnummer: WO 2015/022270

(56) Entgegenhaltungen:
- WO-A1-2010/094692
- WO-A2-02/093586
- DE-A1-102007 038 947
- DE-A1-102012 203 010

## Beschreibung

Die Erfindung betrifft ein Verfahren zur Verringerung der radioaktiven Kontamination der Oberfläche einer in einem Kernreaktor eingesetzten Komponente, welche sich mit radioaktiv kontaminiertem Wasser in Kontakt befindet. Die genannte Komponente ist bei einer ersten Verfahrensvariante ein Bestandteil eines wasserführenden Kreislaufs eines Kernkraftwerks, also insbesondere des Primärkreislaufs eines Druckwasserreaktors, eines Siedewasserreaktors oder eines Schwerwasserreaktors, also allgemein des Kühlkreislaufsystem eines Kernreaktors, und bei einer zweiten Verfahrensvariante eine Komponente, welche bei Wartungsarbeiten am Reaktor oder am Kreislaufsystem mit radioaktiven Wasser in Berührung kommt, also ein Werkzeug oder eine Beckenwand. In jedem Fall findet aufgrund des unmittelbaren Kontakts mit radioaktivem Wasser eine Kontamination der Komponentenoberfläche statt. So ist es vor der Durchführung von Wartungsarbeiten unerlässlich, die inneren Oberflächen des Kreislaufsystems einer zeit- und kostenintensiven Dekontamination zu unterziehen. Entsprechendes gilt für Oberflächen, die im Zuge von Wartungsarbeiten kontaminiert wurden.

WO 2010/094692 als auch DE 10 2007 038947 beschreiben Verfahren zur Verringerung der radioaktiven Kontamination der Oberfläche einer in einem Kernreaktor eingesetzten Komponente durch Verwendung einer filmbildenden amphiphilen Substanz.

Davon ausgehend ist es die Aufgabe der Erfindung, ein Verfahren vorzuschlagen, mit welchem eine Kontamination einer Komponentenoberfläche verringert und dadurch der Reinigungs- bzw. Dekontaminationsaufwand, der auch die Entsorgung dekontaminierter Reinigungslösungen beinhaltet, gemindert wird.

Diese Aufgabe wird durch ein Verfahren nach Anspruch 1 gelöst. Es hat sich in überraschender Weise gezeigt, dass ein hydrophober Film, insbesondere auch unter den Bedingungen des Leistungsbetriebs eines Kernreaktors, eine Filterwirkung u.a. gegenüber im Kühlmittel enthaltenen Ionen aufweist. Somit wird das Festsetzen radioaktiver Nuklide an einer Komponentenoberfläche, was zu einer radioaktiven Kontamination bzw. zu einer Erhöhung der Dosisleistung der Komponente führen würde, verhindert oder zumindest behindert. **Es** ist damit der Vorteil verbunden, dass bei Revisionsarbeiten mit radioaktiv kontaminiertem Wasser in Berührung kommende Oberflächen insbesondere von Werkzeugen nicht oder zumindest in verringertem Umfang radioaktiv kontaminiert werden, was mit einer entsprechenden radioaktiven Belastung des Revisionsarbeiten ausführenden Personals verbunden wäre. Außerdem reduziert sich der Aufwand für die Reinigung der Werkzeuge.

Es war weiterhin überraschend, dass unter dem hydrophoben Film, also zwischen dem Film und der metallischen Komponentenoberfläche eine einen Korrosionsschutz bildende Oxidschicht entsteht, wobei diese aber wegen des fehlenden oder zumindest verringerten Einbaus von aus dem radioaktiven Wasser bzw. Kühlmittel stammenden Radionukliden im Zuge ihres Wachstums keine oder eine zumindest niedrigere Radioaktivität, als dies bei herkömmlicher Vorgehensweise der Fall ist, aufweist. Vorteilhaft ist weiterhin, dass bei einer späteren Dekontamination eines wasserführenden Kreislaufs, bei der die Oxidschicht mit Hilfe einer chemischen Reinigungslösung von den Komponentenoberflächen entfernt wird, die Menge der Radionuklide in dem zu entsorgenden Abfall verringert ist.

Die Erfindung wird nun unter Bezugnahme auf die beigefügten Zeichnungen näher erläutert. Es zeigen:
- Fig. 1: in stark schematisierter Form den Primärkreislauf eines Druckwasserreaktors,

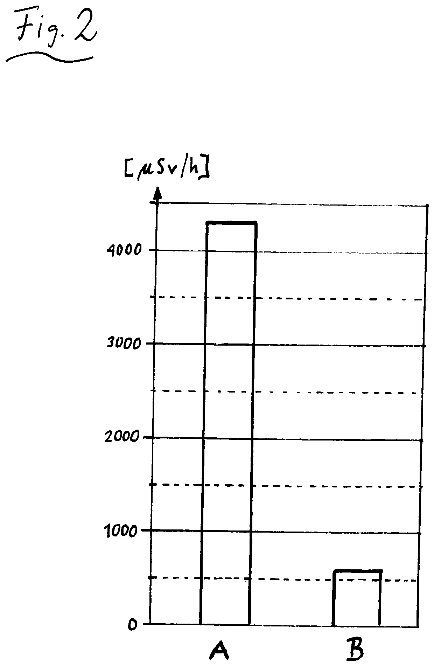

- Fig. 2: ein Diagramm, welches das Ergebnis eines Tests wiedergibt,

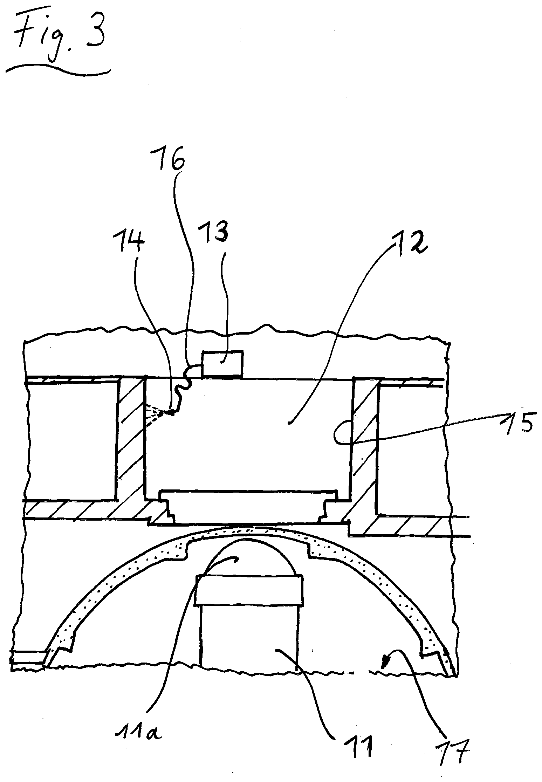

- Fig. 3: ein Flutbecken, dessen Wand mit einem hydrophoben Film versehen wird,
- Fig. 4: ein als Tauchfahrzeug ausgebildetes Werkzeug, dessen Oberfläche mit einem hydrophoben Film versehen ist.

Unter den Bedingungen des Leistungsbetriebes eines Kernreaktors zeigen un- und niedriglegierte Stähle und selbst rostfreie Stähle, z.B. austenitische FeCrNi-Stähle, aus denen das Röhrensystem der Kühlkreisläufe besteht, Ni-Legierungen, aus denen beispielsweise die Austauscher-Rohre von Dampferzeugern bestehen und sonstige etwa für Kühlmittelpumpen verwendete, z.B. Cobalt enthaltende Bauteile, eine gewisse Löslichkeit in Wasser. Aus den genannten Legierungen herausgelöste Metallionen gelangen mit dem Kühlmittelstrom zum Reaktordruckbehälter, wo sie durch die dort herrschende Neutronenstrahlung teilweise in radioaktive Nuklide umgewandelt werden. Die Nuklide werden wiederum vom Kühlmittelstrom im gesamten Kühlmittelsystem verteilt und werden in Oxidschichten, die sich während des Betriebs auf den Oberflächen von Bauteilen des Kühlmittelsystems bilden, eingelagert. Mit zunehmender Betriebsdauer summiert sich die Menge der abgelagerten aktivierten Nuklide, so dass die Radioaktivität bzw. die Dosisleistung an den Bauteilen des Kühlmittelsystems zunimmt.

Bevor Kontroll-, Wartungs-, Reparatur- und Rückbaumaßnahmen am Kühlmittelsystem vorgenommen werden können ist eine Reduzierung der radioaktiven Strahlung einzelner Komponenten oder des gesamten Kreislaufsystems erforderlich, um die Strahlungsbelastung des Personals zu verringern. Dies geschieht dadurch, dass die auf den Oberflächen der Bauteile vorhandene Oxidschicht mittels eines Dekontaminationsverfahrens möglichst vollständig entfernt wird. Bei einer derartigen Dekontamination wird entweder das gesamte Kühlmittelsystem bzw. ein davon etwa durch Ventile abgetrennter Teil mit einer wässrigen Reinigungslösung befüllt oder es werden einzelne Bauteile des Systems in einem separaten, die Reinigungslösung enthaltenden Behälter behandelt, wobei sich die Oxidschicht auflöst. Die dabei aus der Oxidschicht in die Lösung übergetretenen Metallionen können dann aus der Lösung entfernt werden, indem diese über einen Ionentauscher geleitet wird. Problematisch dabei ist insbesondere die dabei entstehende große Menge an radioaktiven Abfall, deren Entsorgung mit hohem Aufwand und hohen Kosten verbunden ist.

Im erfindungsgemässen Verfahren wird auf einer mit dem radioaktiv kontaminierten Wasser bzw. dem Reaktorkühlmittel in Berührung stehenden Oberfläche einer Komponente des Kreislaufs ein hydrophober Film aus einer amphiphilen Substanz erzeugt. Zu diesem Zweck wird in das sich im Kreislauf befindliche Wasser bzw. Kühlmittel ein filmbildendes Agens der oben genannten Art dosiert. Dabei ist eine permanente Zudosierung, insbesondere auch während des Leistungsbetriebs des Reaktors nicht vorgesehen. Die Filmbildung wird vielmehr beendet, wenn sich ein geschlossener hydrophober Film auf den Komponentenoberflächen gebildet hat. Es hat sich überraschender Weise gezeigt, dass der hydrophobe Film eine gewisse Durchlässigkeit für Wassermoleküle, nicht jedoch für unpolare Moleküle wie Sauerstoff aufweist. Wassermoleküle können somit zur Komponentenoberfläche vordringen, so dass sich dort eine Oxidschicht bilden kann, wobei diese wegen der Abwesenheit von Sauerstoff im Wesentlichen aus Magnetit besteht. Es wird somit der Vorteil erzielt, dass sich eine schützende Oxidschicht bildet, wobei diese aber, aufgrund der Filterwirkung des Films gegenüber radioaktiven Nukliden und Kolloiden eine verringerte Radioaktivität aufweist.

Die jeweilige Oberfläche, auf der ein hydrophober Film erzeugt werden soll, kann metallisch blank sein oder eine bereits im Reaktorbetrieb oder auch auf sonstige Weise entstandene Oxidschicht aufweisen. Im erstgenannten Fall wird der Film auf eine durch ein Dekontaminationsverfahren von einer Oxidschicht im Wesentlichen befreiten Oberfläche oder auf die Oberfläche einer neuen, in den Kreislauf einzubauenden oder eingebauten Komponente aufgebracht.

Besonders vorteilhaft ist, wenn die erste Verfahrensvariante nach der Durchführung einer Teil- oder Vollkreis-Dekontamination des Kühlkreislaufs oder bei einer neuen Komponente durchgeführt wird, welche eine bereits eingebaute Komponente ersetzt. Die entsprechenden Komponentenoberflächen sind dann zum Zeitpunkt der Erzeugung eines hydrophoben Films von keiner nennenswerten Oxidschicht überzogen und nur wenig oder überhaupt nicht radioaktiv belastet, so dass die oben genannten vorteilhaften Effekte besonders ausgeprägt sind. Die Erzeugung eines Films auf einer bereits vorhandenen Oxidschicht ist dann zweckmäßig, wenn es sich um eine erfindungsgemäß erzeugte Oxidschicht, also um eine solche handelt, die unter einem auf die Oberfläche aufgebrachten hydrophoben Film entstanden ist, wenn dieser sich nach längerer Betriebsdauer ganz oder teilweise abgelöst hat.

Die Zudosierung der filmbildenden amphiphilen Substanz in das Kühlmittel erfolgt vorzugsweise zu einem außerhalb des Leistungsbetriebs des Reaktors liegenden Zeitpunkt, also in einer Phase, in der das Leistungsniveau des Reaktors noch nicht auf den kritischen Zustand eingeregelt ist. Aufgrund der gegenüber dem Leistungsbetrieb stark reduzierten Strahlungsintensität im Reaktordruckbehälter ist die Gefahr eines radiolytischen Abbaus der amphiphilen Substanz verringert. So kann der hydrophobe Film beispielsweise während der Anfahrphase des Reaktors erzeugt werden, wobei die Möglichkeit besteht, die Filmbildung abzuschließen, bevor das Strahlungsniveau auf ein für die amphiphile Substanz schädliches Niveau angestiegen ist. Auch kann eine Filmbildung im Zuge einer Revisionsmaßnahme vorgenommen werden, bei der die Brennelemente aus dem Reaktordruckbehälter entfernt sind. Damit sichergestellt ist, dass sich keine mehrschichtigen Filme ausbilden, kann die mit einem Film zu belegende Fläche berechnet und eine entsprechende Menge an amphiphiler Substanz dem Kühlmittel zudosiert werden. Ein Indikator dafür, dass sich ein geschlossener unimolekularer Film ausgebildet hat, kann auch, wie in WO 2013/127844 A1 beschrieben, der Verlauf der Konzentration der amphiphilen Substanz herangezogen werden und beispielsweise die Dosierung der genannten Substanz beendet werden, wenn deren Konzentration im Kühlmittel an zumindest einem Messpunkt einen von 1 ppm bis 2 ppm erreicht hat.

Im erfindungsgemässen Verfahren wird vor der Erzeugung des hydrophoben Films auf die Oberfläche einer Komponente des Kühlkreislaufs wenigstens eine Depotsubstanz aufgebracht. Unter einer Depotsubstanz ist im vorliegenden Zusammenhang eine chemische Verbindung oder ein Element, beispielsweise ein Edelmetall wie Platin, zu verstehen, welches einen Einfluss auf eine sich auf der Komponentenoberfläche bildende Oxidschicht hat. Die Depotsubstanz oder ein Präkursor davon wird in das Kühlmittel dosiert, wobei sie durch das den Kühlkreislauf durchströmende Kühlmittel über den gesamten Kreislauf bzw. einen abgetrennten Bereich davon verteilt wird. Die Depotsubstanz wird an der Oberfläche einer Komponente, beispielsweise wenn im Kühlmittel reduktive Bedingungen herrschen, abgeschieden. Durch die genannte Vorgehensweise ergibt sich ganz allgemein die Möglichkeit, die an der Komponentenoberfläche vorhandene Depotsubstanz oder eine entsprechende Depotschicht mit Hilfe des sie überdeckenden hydrophoben Films vor der Einwirkung eines im Kühlmittel enthaltenen Agens unter den Bedingungen während der Anfahrphase des Reaktors oder im Leistungsbetrieb zu schützen, um etwa eine Reaktion zu unterbinden, welche beispielsweise eine chemische Umwandlung der Depotschicht oder die Entstehung von unerwünschten Reaktionsprodukten zur Folge hat.

Besonders vorteilhaft ist die in Rede stehende Ausführungsform, wenn zur Erzeugung einer Depotschicht Salze der Chromsäure, beispielsweise Eisenchromat oder Zinkchromat dem Kühlmittel zudosiert werden sollen. An der Oberfläche der Komponenten wird das sechswertige Chrom der genannten Salze in Zusammenwirkung mit dem Eisen der Komponenten als Reaktionspartner zu dreiwertigem Chrom reduziert, so dass sich Chromite an der Komponentenoberfläche abscheiden. Das dreiwertige Chrom wird in die auf der Oberfläche aufwachsende Oxidschicht eingebaut, wobei sich chromreiche Spinell-Oxide mit hoher Schutzwirkung bilden. Während der Anfahrphase des Kernreaktors liegen im Kühlmittel etwa auf Grund darin gelösten Sauerstoffs oder Wassersstoffperoxids oxidative Verhältnisse vor, was zu einer Oxidation des abgeschiedenen Chromits zu löslichem Chromat, also zu einer Umkehrung der o.g. Reaktion, während der Anfahrphase des Reaktors führt. Erfindungsgemäß wird dies jedoch durch den hydrophoben Film verhindert, so dass, wenn spätestens gegen Ende der Anfahrphase im Kühlkreislauf wieder reduktive Verhältnisse vorliegen, das vorher auf die Komponentenoberflächen abgeschiedene Chromit in unverminderter Menge vorliegt.

Im Falle einer Platin-Depotschicht besteht etwa aufgrund einer unvollständigen Beschichtung der Komponentenoberflächen mit Platin die Gefahr der Entstehung von Kontaktkorrosion. Bei einer Kontaktkorrosion kommen zwei verschiedene metallische Elemente unter Gegenwart eines Elektrolyten miteinander in Berührung. Dabei wird das unedlere Material, im vorliegenden Fall nicht mit Platin dotierte Oberflächenbereiche der Komponente, oxidiert. Dies lässt sich wirkungsvoll durch einen hydrophoben Film der in Rede stehenden Art, welcher eine auch nicht dotierte Oberflächenbereiche überdeckende Barriere gegenüber im Kühlmittel gelösten Sauerstoff bildet, verhindern. Um die Entstehung von Kontaktkorrosion bereits während der Erzeugung der Platin-Depotschicht zu verhindern, wird die Platin-Behandlung unter reduzierenden Bedingungen durchgeführt.

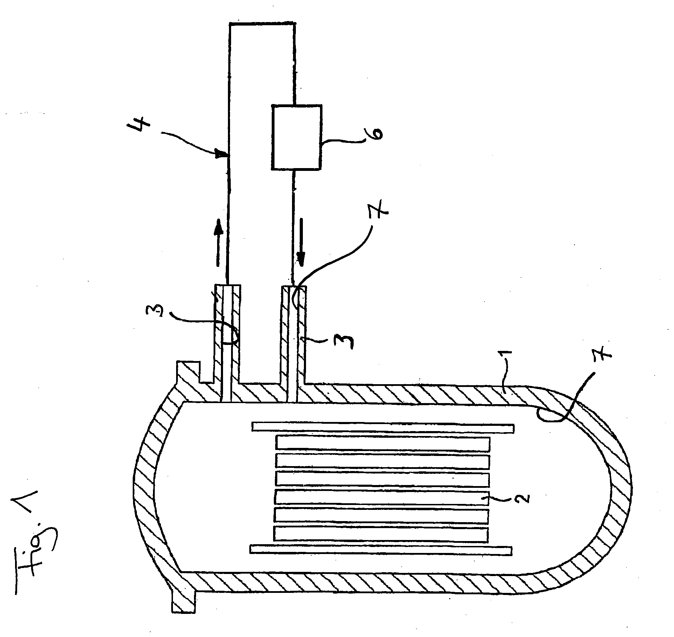

Der in Fig. 1 gezeigte Primärkreislauf eines Druckwasserreaktors umfasst einen Reaktordruckbehälter 1, in dem sich Brennstäbe 2 befinden. Über Anschlussstutzen 3 ist an dem Reaktordruckbehälter 1 ein Rohrleitungssystem 4 angeschlossen, in welches verschiedene Komponenten, bspw. ein Dampferzeuger und eine Kühlmittelpumpe (nicht gezeigt), zwischengeschaltet sind. Die Komponenten sind durch das Rechteck 6 in Fig. 1 symbolisiert. Die Dosierung einer einen hydrophoben Film auf den Oberflächen des Primärkreislaufs bildenden amphiphilen Substanz, im Folgenden wird kurz von einem Filmbildner gesprochen, erfolgt beispielsweise während der Anfahrphase des Reaktors. Falls die Bildung eines Films auf den inneren Oberflächen des Reaktordruckbehälters 1 und den Oberflächen der Brennstäbe 2 nicht erwünscht ist, kann der Reaktordruckbehälter 1 fluidisch vom übrigen Kühlkreislauf abgetrennt werden. Für die Dosierung des Filmbildners kann das anlageneigene Dosiersystem (nicht gezeigt) verwendet werden.

Das Erzeugen eines hydrophoben Films auf den Oberflächen des Kühlkreislaufes erfolgt vorzugsweise im Anschluss an eine Vollkreis- oder ein Teilkreisdekontamination oder wenn eine Komponente aus dem Kreislauf entfernt und durch eine neue ersetzt wird. In letzterem Fall ist die Oberfläche der neuen Komponente im Wesentlichen noch blank, d.h. noch nicht mit einer Oxidschicht überzogen, wie sie im Leistungsbetrieb des Reaktors entsteht. Die Dosierung erfolgt bei Temperaturen oberhalb der Krafft-Temperatur der jeweils verwendeten amphiphilen Substanz, also etwa ab 70°C.

Mit zunehmender Temperatur und damit zunehmender Brownscher Molekularbewegung können sich die Van-der-Waals-Bindungen zwischen den unpolaren Gruppen unter Bildung von Lücken auftrennen, so dass Wassermoleküle in diese Lücken gelangen können, wobei sie aufgrund ihres Dipolcharakters durch das an der Oberfläche der Komponenten bzw. im Bereich der polaren Gruppe des hydrophoben Films herrschende elektrische Potential angezogen werden. Eine Kontamination der sich zwischen dem Film und den Komponentenoberflächen bildenden Oxidschichten durch Einbau radioaktiver Substanzen findet jedoch auch bei hohen Temperaturen nicht oder allenfalls in geringem Ausmaß statt. Im Falle von ionalen Radionukliden liegt dies vermutlich daran, dass diese, bedingt durch ihre Ladung, eine relativ große Hydrathülle und damit eine effektive Größe aufweisen, die einen Durchtritt durch den hydrophoben Film zumindest behindert.

Der Aufbau von Radioaktivität in sich bildenden Oxidschichten beruht auch auf der Anlagerung oder Inkorporierung von Kolloiden welche radioaktive Nuklide enthalten. Kolloide, die eine Größe bzw. einen Radius von etwa 1 nm bis 1000 nm aufweisen, sind um Größenordnungen größer als hydratisierte Ionen, sodass ein Durchtritt durch den hydrophoben Film praktisch ausgeschlossen ist. Während der Anfahrphase des Reaktors und auch während des sich daran anschließenden Leistungsbetriebs ist somit eine Bildung von Oxidschichten möglich, welche gegenüber Oxidschichten bei üblicher Vorgehensweise, also solchen Oxidschichten, die mit dem Kühlmittel in unmittelbaren Kontakt stehen, eine wesentlich verringerte Radioaktivität aufweisen.

Aufgrund der mit dem Kühlmittel transportierten Radionuklide herrscht im Leitungssystem bzw. in den zwischengeschalteten Komponenten eine gewisse radioaktive Strahlung vor. Diese ist jedoch vergleichsweise gering, so dass ein radiolytischer Abbau der organischen Gruppen des Films nicht zu befürchten ist.

Für die oben beschriebenen Schutzwirkungen des hydrophoben Films reicht es aus, wenn dieser in einer unimolekularen Schicht auf den Komponentenoberflächen vorliegt. Um dies zu erreichen ist es zunächst zweckmäßig die geometrische Oberfläche des Kreislaufsystems oder eines Abschnitts davon bei der Berechnung der erforderlichen Menge an Filmbildner zu berücksichtigen. Je nach Art- und Laufzeit der Anlage weisen die Oberflächen des Kühlkreislaufs eine mehr oder weniger stark ausgeprägte Rauigkeit auf, was durch einen Faktor beispielsweise von 1,5 bis 2,5 berücksichtigt werden kann. Die für die geometrische Oberfläche berechnete Menge an Filmbildner wird dann mit diesem Faktor multipliziert. Während der Dosierung des Filmbildners ist es zweckmäßig, dass an mehreren über den Kühlkreislauf verteilten Stellen die Konzentration des Filmbildners im Kühlmittel bestimmt bzw. gemessen wird. Die amphiphilen Moleküle weisen eine größere Bindungsaffinität zu metallisch blanken oder eine Oxidschicht aufweisenden Oberflächen auf als zu Oberflächenbereichen, die bereits mit einem hydrophoben Film belegt sind. Dies führt dazu, dass - bei konstanter Dosierrate - die Konzentration des Filmbildners im Kühlmittel zunächst abnimmt und mit einem asymptotischen Konzentrationsverlauf später eine im Wesentlichen gleich bleibende Konzentration an Filmbildner beispielsweise von 1 ppm erreicht wird. Es hat sich dann eine vollständige, im Wesentlichen unimolekulare Schicht von Filmbildner auf den Komponentenoberflächen gebildet.

In einem Test wurden Proben aus Carbonstahl ASME SA179 in Form von 7,3 cm langen Rohrhälften im Kreislaufsystem eines Siedewasserreaktors platziert und so den Bedingungen des Leistungsbetriebs des Reaktors ausgesetzt. Die Proben wurden vorher gereinigt, d.h. ihre Oberfläche entsprach im Wesentlichen einem Zustand, welcher auf den inneren Oberflächen des Kreislaufsystems nach einer chemischen Dekontamination vorliegt. Außerdem wurde vorher auf einem Teil der Proben ein Film aus Octadecylamin aufgebracht. Zu diesem Zweck wurden die Proben in einem Versuchskreislauf positioniert und dem darin zirkulierenden, eine Temperatur von etwa 80°C aufweisenden Wasser die genannte amphiphile Substanz zudosiert.

Nach drei Monaten wurden die Proben aus dem Kreislaufsystem des Siedewasserreaktors entnommen und deren Oberflächen untersucht. Auf den unbehandelten Proben hatte sich eine zumindest überwiegend aus Hämatit bestehende, somit rot gefärbte Oxidschicht gebildet. Auf den behandelten, d.h. mit einem hydrophoben Film überzogenen Proben war ebenfalls eine Oxidschicht vorhanden, diese hatte jedoch eine schwarze Färbung, d.h. sie bestand überwiegend aus Magnetit. Der auf den behandelten Proben vorhandene hydrophobe Film hat somit den Zutritt von Sauerstoff zur metallischen Oberfläche der Proben verhindert. Als Sauerstofflieferant für die Magnetitbildung dienten praktisch alleine Wassermoleküle, welche zumindest bei hohen Temperaturen, wie sie während des Leistungsbetriebs des Reaktors vorliegen, durch die in das Wasser vorstehenden unpolaren Reste des die Oberfläche der Proben bedeckenden Film hindurch treten und somit an das Metall der Proben gelangen.

Mithilfe eines Gamma-Sensors wurde die Dosisleistung der Proben bestimmt. Dabei zeigte sich, dass die Dosisleistung der unbehandelten Proben bei 4300 µSv/h und jene der behandelten, also mit einem Film der in Rede stehenden Art bedeckten Proben mit 580 µSv/h um ein Vielfaches niedriger war.

Wie bereits oben erwähnt, ist es vorteilhaft, wenn die Filmbildung außerhalb der Betriebsphase des Reaktors, etwa im Anschluss von Revisions- bzw. Wartungsarbeiten erfolgt. Der Film kann sich dann bei relativ niedrigen Temperaturen und vor allem ohne Einwirkung von während des Reaktorbetriebs herrschenden Strahlungen bilden. Diese Situation wurde bei dem beschriebenen Test simuliert, indem die Proben in einer Laboranlage in Abwesenheit von Strahlung mit einem hydrophoben Film versehen wurden. Die sich unter dem Film bildende Oxidschicht ist, was ein optischer Vergleich der behandelten und unbehandelten Proben A und B ergab, deutlich gleichmäßiger und lückenloser ausgebildet. Die Oxidschicht bietet daher einen größere Schutzwirkung gegenüber Korrosion als dies bei der Oxidschicht der unbehandelten Proben A der Fall ist. Der Grund für die unterschiedliche Filmqualität bei den A- und B-Proben könnte darin liegen, dass die amphiphile Substanz wie ein Tensid wirkt, so dass an den Komponentenoberflächen haftende Partikel in das Kühlmittel übertreten, die Oberflächen somit vor bzw. im Zuge der Filmbildung gereinigt werden.

Selbst wenn der Film nach einer gewissen Betriebszeit nicht mehr wirksam ist, wird die bereits vorhandene, eine geringe Dosisleistung aufweisende Oxidschicht nur noch relativ langsam wachsen, da der Transport von oxidierend wirkende Agentien wie Wasser und Sauerstoff durch die dichte Oxidschicht hindurch zum Grundmetall einer Komponente behindert ist. Es ist auch möglich, nach einer gewissen Betriebszeit den Film durch Dosierung einer amphiphilen Substanz in das Wasser bzw. das Reaktorkühlmittel zu erneuern.

Neben radioaktiven Nukliden in ionaler Form können auch radioaktive Kolloide, also Partikel mit einer Größe von etwa 1 nm bis 1000 nm im Wasser vorhanden sein. Kolloide von Feststoffen sind in aller Regel geladen, d.h. sie tragen an ihrer Oberfläche eine positive oder negative Ladung. Wird nun eine amphiphile Substanz verwendet, die eine gleichsinnig geladene polare Gruppe aufweist, haftet das Kolloid aufgrund der Coulomb'schen Abstoßung an der Filmoberfläche nicht an. Ein Beispiel eines radioaktiven Kolloids ist ein aus Ag 110m bestehendes Kolloid. Das Silber stammt beispielsweise aus Dichtungen, etwa der Deckeldichtung des Reaktordruckbehälters. Durch Verwendung einer amphiphilen Substanz mit einer hinsichtlich der vorhandenen Kolloide gleichsinnig geladenen polaren Gruppe, vorzugsweise einer Aminogruppe, etwa einer quartären Aminogruppe, bei positiv geladenen Kolloiden und einer Phosphonsäuregruppe bei negativ geladenen Kolloiden, kann das Festsetzen von radioaktiven Kolloiden an Oberflächen von Werkzeugen oder an Oberflächen von Komponenten eines wasserführenden Kreislaufs des Reaktors verhindert oder zumindest verringert werden.

Eine Verfahrensvariante bezieht sich auf die Revisionsphase eines Kernreaktors, ist somit ein Revisionsverfahren, also ein Verfahren zur Durchführung von Wartungs- und Instandhaltungsarbeiten, für einen Kernreaktor, insbesondere für einen Siedewasserreaktor, einen Druckwasserreaktor oder einen Schwerwasserreaktor. Kernreaktoren müssen nach einer bestimmten Betriebsdauer, beispielsweise in jährlichem Turnus, einer Revision unterzogen werden, bei der neben den o.g. Arbeiten auch Überprüfungsmaßnahmen durchgeführt werden. Im Zuge einer Revision wird üblicherweise der Reaktordruckbehälter 11 des Reaktors, in dem sich die Brennelemente (nicht gezeigt) befinden geöffnet, indem dessen Deckel 11a entfernt wird. Aus Strahlenschutzgründen wird ein sich oberhalb des Reaktordruckbehälter 11 angeordnetes Flutungsbecken 12 geflutet. Von einer oberhalb des Flutungsbeckens 12 angeordneten Arbeitsbühne (nicht gezeigt) aus können dann Maßnahmen der o.g. Art im Reaktordruckbehälter 11 und an den damit verbundenen Komponenten und Systemen durchgeführt werden.

Ein Problem bei Revisionsarbeiten ist, dass es sich nicht vermeiden lässt, dass Reaktorkühlmittel sich mit dem Wasser des Flutungsbeckens 12 sowie gegebenenfalls weiterer Becken wie etwa Brennelementlagerbecken vermengt und dabei Radioaktivität in Bereiche außerhalb des geöffneten Reaktordruckbehälters 11 verschleppt wird. Das dabei kontaminierte Wasser kann zwar nach der Revision aus den jeweiligen Becken und sonstigen Kompartimenten entfernt werden. Es bleiben aber Radionuklide an den Beckenwandungen 15 haften und führen zu einer erhöhten Strahlenbelastung bzw. Dosisleistung. Je nach Art des Materials der Wandungen, die beispielsweise mit Edelstahl ausgekleidet sind, bleiben die Radionuklide mehr oder weniger fest haften, so dass unter Umständen aufwändige Reinigungsmaßnahmen erforderlich sind, welche zu einer Zunahme der radioaktiven Belastung des ausführenden Personals führen. Ein ähnliches Problem ergibt sich bei Geräten wie Manipulatoren, Werkzeugen und Hilfskonstruktionen, deren beispielsweise metallische Oberflächen, die im Zuge der Revision mit radioaktiv belastetem Wasser in Kontakt kommen, insbesondere innerhalb des Reaktordruckbehälters 11 eingesetzt werden. Derartige Geräte werden vielfach von den die Revision durchführenden Service-Unternehmen zu Verfügung gestellt, d.h. werden nach Abschluss der Revisionsarbeit wieder abtransportiert und in anderen Kernkraftwerken verwendet. Aber auch wenn die Geräte im Kontrollbereich des Kernkraftwerks verbleiben, ist eine radioaktive Belastung des Personals infolge der Revision problematisch, weil die Geräte in der Regel dort gelagert, gewartet oder, im ungünstigsten Fall, entsorgt werden müssen. Die genannten Geräte müssen daher einer besonders gründlichen Dekontamination unterzogen werden.

Eine solche Dekontamination ist nun dadurch unnötig oder zumindest auf einfachere Weise möglich, wenn auf den Komponentenoberflächen, also den Wänden 15 von Lagerbecken 12 und der Oberfläche von Werkzeugen ein aus einer amphiphilen Substanz bestehender oder eine solche Substanz enthaltender hydrophober Film erzeugt wird, bevor die Oberflächen mit radioaktiv kontaminiertem Wasser, insbesondere dem Primärkühlmittel des Reaktors in Berührung kommen.

Der Film kann auf unterschiedliche Weise auf die Oberflächen aufgebracht werden, wobei das Eintauchen der Geräte in eine die filmbildende Substanz enthaltende Lösung oder das Besprühen der Oberflächen mit einer solchen Lösung, bevorzugt sind, weil sie mit geringem Aufwand durchführbar sind.

Das oben erwähnte, sich oberhalb des Reaktordruckbehälters 11 befindliche Flutbecken 12 bzw. ein Becken oder ein Behälter allgemein, lässt sich auf einfache Weise durch ein Sprühverfahren mit einem hydrophoben Film versehen. Dazu ist lediglich ein z.B. handelsübliches Sprühgerät 13 erforderlich, welches eine auf die Beckenwandung 15 zu richtende Sprühdüse 14 und einen diese mit dem Sprühgerät verbindenden Schlauch 16 umfasst. Mit Hilfe der Sprühdüse 14 wird auf die Wandungen 15 eine wässrige Lösung appliziert, welche die filmbildende Substanz enthält. Nachdem der Film auf die Beckenwandung aufgebracht ist, wird der den Reaktordruckbehälter 11 umgreifende Ringraum 17 und das Flutbecken 12 geflutet.

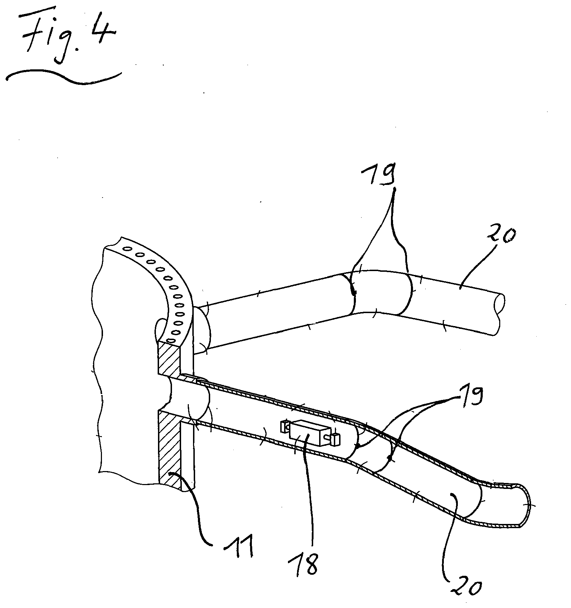

Ein Beispiel für ein im Zuge einer Revision eingesetzten Werkzeugs ist in Fig. 4 gezeigt. Es handelt sich um ein ferngesteuertes Tauchfahrzeug 18, welches z. B. zur Überprüfung von Schweißnähten 19 der Hauptkühlmittelleitungen 20 dient. Auf die Oberfläche des Tauchfahrzeugs 18 wird beispielsweise durch Besprühen mit einer eine filmbildende Substanz enthaltenden Lösung ein hydrophober Film aufgebracht. Denkbar ist aber auch, dass das Tauchfahrzeug 18 in ein Becken bzw. in ein Behandlungsbad eingebracht wird, welches mit einer die filmbildende Substanz enthaltenden wässrigen Lösung gefüllt ist.

Die Konzentration der filmbildenden Substanz in der wässrigen Lösung bei einem Sprüh- oder Tauchverfahren liegt beispielsweise in einem Bereich von 1 ppm bis 800 ppm. Bei der Applikation der Lösung auf eine Oberfläche ist eine erhöhte, d.h. eine oberhalb der Raumtemperatur liegenden Temperatur etwa bis 90 °C zweckmäßig.

Als filmbildende Substanz kommt bei der ersten und der zweiten Verfahrensvariante eine chemische Verbindung in Betracht, die ein polares, von wenigstens einer polaren Gruppe und ein unpolares, von wenigstens einem Kohlenwasserstoffrest gebildetes Ende aufweist. Das polare Ende dient als Ankergruppe, mit welcher die Substanz an der metallischen oder mit einer Oxidschicht überzogenen Oberfläche einer Komponente haftet. Das unpolare Ende ragt in das radioaktive Wasser hinein.

Das unpolare Ende der amphiphilen Substanz weist eine Kohlenstoffkette, vorzugsweise eine aliphatische Gruppe, mit 8 bis 22 Kohlenstoffatomen auf. Bei dem polaren Teil handelt es sich beispielsweise um eine Säuregruppe, z.B. eine Sulfonsäure-, Phosphorsäure-, Phosphonsäure, - oder Carboxylgruppe, und um Derivate der genannten Gruppen. Weiterhin kommen als polare Gruppe eine Hydroxylgruppe (Thiole) oder eine Basegruppe wie die primäre, sekundäre, tertiäre oder quartäre Aminogruppe, eine Imingruppe sowie Derivate der genannten Gruppen in Frage. Beispiele für den in Rede stehenden Zweck gut geeignete amphiphile Substanzen sind Alkylamine und Alkylphosphonsäuren.

Um das Anlagern der amphiphilen Substanz an die Oberfläche einer Kreislaufkomponente zu verbessern wird bei einer Verfahrensvariante die die amphiphile Substanz enthaltende wässrige Lösung so beeinflusst, dass die Ladung der Oberfläche, die sich aufgrund der elektrochemischen Doppelschicht an der Grenzfläche Metall / Lösung ergibt, eine möglichst große Coulomb'sche Anziehung der polaren Gruppe der amphiphilen Substanz hervorruft. Die Ladung der Oberfläche lässt sich in gewisser Weise durch die Wahl der Temperatur beeinflussen. Vorzugsweise erfolgt eine Ladungsveränderung oder Ladungsverstärkung über den pH-Wert der Lösung. Ausgehend von einem Null-Ladungspunkt, bei der die Oberfläche zumindest keine nennenswerte Ladung aufweist, kann durch Absenken des pH-Werts eine zusehends positive und durch pH-Wert-Erhöhung eine zunehmend negative Oberflächenladung hervorgerufen werden. Im Falle einer Ladungsverstärkung ist bereits eine zur Ladung der polaren Gruppe entgegengesetzte Oberflächenladung vorhanden.

Dabei ist es zweckmäßig, wenn amphiphile Substanzen verwendet werden, deren polare Gruppen sich ladungsmäßig gerade umgekehrt verhalten wie die Oberfläche. So eignet sich bei positiv geladener Oberfläche, die sich in der Regel bei saurer Lösung einstellt, beispielsweise eine Phosphonsäuregruppe als polare Gruppe, welche bei den genannten Bedingungen negativ geladen ist. Im Fall von negativ geladenen Oberflächen kommt dagegen eine amphiphile Substanz mit einer positiv geladenen polaren Gruppe zum Einsatz, beispielsweise eine quartäre Aminogruppe.

## Patentansprüche

1. Verfahren zur Verringerung der radioaktiven Kontamination der Oberfläche einer in einem Kernreaktor eingesetzten Komponente, welche sich mit radioaktiv kontaminiertem Wasser in Kontakt befindet, bei dem auf der Oberfläche einer Komponente ein hydrophober Film erzeugt wird, indem die Oberfläche mit einer wässrigen Lösung benetzt wird, welche eine filmbildende amphiphile Substanz enthält, wobei der hydrophobe Film auf der inneren Oberfläche einer Komponente eines wasserführenden Kreislaufs des Kernreaktors und/oder im Anschluss an eine Teil- oder Vollkreisdekontamination des Kreislaufs erzeugt wird, **dadurch gekennzeichnet, dass** vor der Erzeugung des hydrophoben Films auf die Oberfläche wenigstens eine Depotsubstanz aufgebracht wird.

2. Verfahren nach Anspruch 1, **dadurch gekennzeichnet, dass** im Falle des Austauschs einer Komponente durch eine neue Komponente der hydrophobe Film auf der neuen Komponente erzeugt wird.

3. Verfahren nach einem der vorhergehenden Ansprüche, **dadurch gekennzeichnet, dass** der hydrophobe Film zu einem außerhalb des Leistungsbetriebs befindlichen Zeitpunkt, insbesondere während der Anfahrphase des Reaktors erzeugt wird.

4. Verfahren nach einem der vorhergehenden Ansprüche, **dadurch gekennzeichnet, dass** vor der Erzeugung des hydrophoben Films als Depotsubstanz ein Edelmetall und/oder ein Salz der Chromsäure aufgebracht wird.

5. Verfahren nach einem der vorhergehenden Ansprüche, **dadurch gekennzeichnet, dass** das Aufbringen der amphiphilen Substanz auf eine Oberfläche beendet wird, wenn die Oberfläche mit dem hydrophoben Film bedeckt ist.

6. Verfahren nach einem der vorhergehenden Ansprüche, **gekennzeichnet durch** die Verwendung einer amphiphilen Substanz, die ein polares, von wenigstens einer polaren Gruppe und ein unpolares, von wenigstens einem Kohlenwasserstoffrest gebildetes Ende aufweist.

7. Verfahren nach einem der vorhergehenden Ansprüche, **dadurch gekennzeichnet, dass** das Wasser radioaktive Kolloide enthält und ein Film mit einer amphiphilen Substanz erzeugt wird, welche eine polare Gruppe mit einer zur Ladung der Kolloide gleichsinnigen Ladung aufweist.

8. Verfahren nach einem der vorhergehenden Ansprüche, **dadurch gekennzeichnet, dass** eine amphiphile Substanz verwendet wird, die als unpolaren Rest eine aliphatische Gruppe enthält.

9. Verfahren nach einem der vorhergehenden Ansprüche, **gekennzeichnet durch** einen unpolaren Rest mit 8 bis 22 Kohlenstoffatomen.

10. Verfahren nach einem der vorhergehenden Ansprüche, **dadurch gekennzeichnet, dass** eine amphiphile Substanz verwendet wird, die als polare Gruppe eine Säuregruppe, insbesondere eine Phosphonsäuregruppe, oder eine primäre, sekundäre, tertiäre oder quartäre Aminogruppe enthält.

11. Verfahren nach einem der vorhergehenden Ansprüche, **dadurch gekennzeichnet, dass** die wässrige Lösung so beeinflusst wird, dass sich an der Oberfläche eine Ladung bildet, welche der Ladung der polaren Gruppe der amphiphilen Substanz entgegengesetzt ist oder dass sich eine der polaren Gruppe der amphiphilen Substanz entgegengesetzte Oberflächenladung verstärkt.

12. Verfahren nach Anspruch 11, **dadurch gekennzeichnet, dass** die Beeinflussung der Lösung über deren pH-Wert erfolgt.

## Claims

1. Method for reducing the radioactive contamination of the surface of a component used in a nuclear reactor, said component being in contact with radioactively contaminated water, in which a hydrophobic film is generated on the surface of a component by the surface being wetted with an aqueous solution that contains a film-forming amphiphile substance, wherein the hydrophobic film is generated on the inner surface of a component of a water-leading circuit of the nuclear reactor and/or is generated following a partial or full circuit decontamination of the circuit, **characterised in that** at least one deposit substance is applied to the surface before generating the hydrophobic film.

2. Method according to claim 1, **characterised in that**, in the event of exchanging one component with a new component, the hydrophobic film is generated on the new component.

3. Method according to one of the preceding claims, **characterised in that** the hydrophobic film is generated at a point in time outside the power operation, in particular during the starting phase of the reactor.

4. Method according to one of the preceding claims, **characterised in that** a noble metal and/or a salt of the chromic acid is applied as a deposit substance before generating the hydrophobic film.

5. Method according to one of the preceding claims, **characterised in that** the application of the amphiphile substance onto a surface ends when the surface is covered with the hydrophobic film.

6. Method according to one of the preceding claims, **characterised by** the use of an amphiphile substance that has a polar end formed from at least one polar group and a nonpolar end formed from at least one hydrocarbon radical.

7. Method according to one of the preceding claims, **characterised in that** the water contains radioactive colloids, and a film having an amphiphile substance is generated, said amphiphile substance having a polar group having a charge equal to the charge of the colloids.

8. Method according to one of the preceding claims, **characterised in that** an amphiphile substance is used, which contains an aliphatic group as the nonpolar radical.

9. Method according to one of the preceding claims, **characterised by** a nonpolar radical having 8 to 22 carbon atoms.

10. Method according to one of the preceding claims, **characterised in that** an amphiphile substance is used, which contains an acid group, in particular a phosphorous acid group, as the polar group, or a primary, secondary, tertiary or quaternary amino group.

11. Method according to one of the preceding claims, **characterised in that** the aqueous solution is influenced in such a way that a charge is formed on the surface, said charge being opposed to the charge of the polar group of the amphiphile substance, or a surface charge in opposition to the polar group of the amphiphile substance is increased.

12. Method according to claim 11, **characterised in that** the influence of the solution takes place via its pH value.

## Revendications

1. Procédé servant à réduire la contamination radioactive de la surface d'un composant utilisé dans un réacteur nucléaire, laquelle se trouve en contact avec une eau contaminée par radioactivité, où un film hydrophobe est produit sur la surface d'un composant en ce que la surface est humidifiée par une solution aqueuse, laquelle contient une substance amphiphile filmogène, dans lequel le film hydrophobe est produit sur la surface intérieure d'un composant d'un circuit, acheminant de l'eau, du réacteur nucléaire et/ou immédiatement après une décontamination de circuit partielle ou totale du circuit, **caractérisé en ce qu'**au moins une substance de dépôt est appliquée sur la surface avant de produire le film hydrophobe.

2. Procédé selon la revendication 1, **caractérisé en ce que** dans le cas du remplacement d'un composant par un nouveau composant, le film hydrophobe est produit sur le nouveau composant.

3. Procédé selon l'une quelconque des revendications précédentes, **caractérisé en ce que** le film hydrophobe est produit à un moment situé en dehors du fonctionnement normal, en particulier pendant la phase de démarrage du réacteur.

4. Procédé selon l'une quelconque des revendications précédentes, **caractérisé en ce qu'**un métal précieux et/ou un sel de l'acide chromique sont appliqués en tant que substance de dépôt avant la production du film hydrophobe.

5. Procédé selon l'une quelconque des revendications précédentes, **caractérisé en ce que** l'application de la substance amphiphile sur une surface est terminée quand la surface est recouverte du film hydrophobe.

6. Procédé selon l'une quelconque des revendications précédentes, **caractérisé par** l'utilisation d'une substance amphiphile, qui présente une extrémité polaire formée par au moins un groupe polaire et une extrémité non polaire formée par au moins un radical hydrocarboné.

7. Procédé selon l'une quelconque des revendications précédentes, **caractérisé en ce que** l'eau contient des colloïdes radioactifs et un film avec une substance amphiphile est produit, laquelle présente un groupe polaire avec une charge de même signe servant à la charge des colloïdes.

8. Procédé selon l'une quelconque des revendications précédentes, **caractérisé en ce qu'**est utilisée une substance amphiphile, qui contient en tant que radical non polaire un groupe aliphatique.

9. Procédé selon l'une quelconque des revendications précédentes, **caractérisé par** un radical non polaire avec 8 à 22 atomes de carbone.

10. Procédé selon l'une quelconque des revendications précédentes, **caractérisé en ce qu'**est utilisée une substance amphiphile, qui contient en tant que groupe polaire un groupe acide, en particulier un groupe acide phosphorique, ou un groupe amino primaire, secondaire, tertiaire ou quaternaire.

11. Procédé selon l'une quelconque des revendications précédentes, **caractérisé en ce que** la solution aqueuse est influencée de telle sorte que se forme, à la surface, une charge, laquelle est opposée à la charge du groupe polaire de la substance amphiphile, ou qu'une charge de surface opposée au groupe polaire de la substance amphiphile se renforce.

12. Procédé selon la revendication 11, **caractérisé en ce que** l'influence de la solution est effectuée par l'intermédiaire de sa valeur pH.
